# EUROPEAN PATENT SPECIFICATION

(11) **EP 2 662 912 B1**
(45) Date of publication and mention of the grant of the patent: **08.07.2020**
(21) Application number: 13166546.5
(22) Date of filing: 03.05.2013
(51) Int. Cl.: H01M 2/14, H01M 2/16, H01M 10/052

(54) **SEPARATOR AND METHOD OF MANUFACTURING THE SAME AND RECHARGEABLE BATTERY INCLUDING THE SAME**
SEPARATOR UND DESSEN HERSTELLUNGSVERFAHREN SOWIE WIEDERAUFLADBARE LITHIUMBATTERIE MIT DIESEM
SÉPARATEUR ET PROCÉDÉ DE FABRICATION ASSOCIÉ ET BATTERIE AU LITHIUM RECHARGEABLE COMPRENANT CELUI-CI

(30) Priority: 10.05.2012 US 201261645455 P; 21.11.2012 US 201213683529
(43) Date of publication of application: 13.11.2013
(73) Proprietor: Samsung SDI Co., Ltd., Yongin-si, Gyeonggi-do (KR)
(72) Inventor: Kim, Ihn, Gyeonggi-do (KR); Park, Sam-Jin, Gyeonggi-do (KR); Yeou, Jung-Ock, Gyeonggi-do (KR); Choi, Kwi-Seok, Gyeonggi-do (KR)
(74) Representative: Mounteney, Simon James

(56) References cited:
- WO-A1-2007/105869
- WO-A2-2011/105865
- JP-A- 2004 095 538
- KR-A- 20110 097 715
- US-A1- 2010 316 903

## Description

### BACKGROUND OF THE INVENTION

### (a) Field of the Invention

A separator, a method of manufacturing the same, and a rechargeable lithium battery including the separator are related.

### (b) Description of the Related Art

A non-aqueous rechargeable lithium battery includes a separator made of a porous insulating film and interposed between positive and negative electrodes, and the pores of the film are impregnated by an electrolyte including a lithium salt dissolved therein. The non-aqueous rechargeable lithium battery has excellent high-capacity and high energy density characteristics.

However, when the positive and negative electrodes therein are repetitively contracted and expanded during the charge and discharge cycles or exothermic heat due to abnormal operation of a battery becomes large, battery temperature may be abruptly increased. In this case, a separator may be abruptly contracted or destroyed, short-circuit of electrodes may occur.

Accordingly, a method of coating heat resistance inorganic particles along with a binder on at least one side of the separator in order to secure battery stability has been suggested. However, when a content of the heat resistance inorganic particles becomes large, the binder is relatively less included, deteriorating adhesive property of the separator to the electrode.

WO 2007/105869 and US2010/0316903 disclose a separator coated with a binder solution comprising inorganic particles and polymeric binders.

### SUMMARY OF THE INVENTION

The present invention provides a separator for a rechargeable lithium battery as defined in any of claims 1 to 8 and a method for producing said separator as defined in any of claims 9 to 11 and a rechargeable lithium battery as defined in claim 12.

One embodiment provides a separator being capable of improving adhesive property with an electrode while securing stability of a battery.

Another embodiment provides a method of manufacturing the separator.

Yet another embodiment provides a rechargeable lithium battery including the separator.

According to one embodiment, provided is a separator for a rechargeable lithium battery comprising:a substrate; and a coating layer disposed on at least one surface of the substrate, wherein the coating layer comprises at least one polymeric binder, wherein the at least one polymeric binder comprises a first polymeric binder having a first average particle diameter and a second polymeric binder having a second average particle diameter less than the first average particle diameter, wherein the second average particle diameter is of less than or equal to 80% of the first average particle diameter;or wherein the at least one polymeric binder comprises a third polymeric binder and a fourth polymeric binder, wherein the third polymeric binder is soluble in a solvent which the fourth polymeric binder is insoluble in, wherein the solvent is N-methyl-2-pyrrolodone, dimethyl formamide, dimethyl acetamide, tetramethyl urea, triethyl phosphate, dimethyl sulfoxide, acetone, methyl ethyl ketone,methyl isobutyl ketone, cyclohexanone or a combination thereof, wherein, when present, the amounts of the first, second, third or fourth polymeric binders present at a surface portion of the coating layer are greater than at an inner portion of the coating layer,the third polymeric binder is selected from the group consisting of polyvinylidene fluoride (PVdF), polyvinylidene fluoride-hexafluoropropylene (PVdF-co-HFP), polyvinylidene fluoride-trichloroethylene, polyvinylpyrrolidone, polyethyleneoxide (PEO), polyacrylonitrile (PAN), polyimide (PI), polyamic acid (PAA), polyamideimide (PAI), aramid, polyvinylacetate (PVA), an ethylenevinylacetate copolymer, an ethyleneethylacrylate copolymer, polymethylmetaacrylate (PMMA), polyvinylether (PVE), carboxylmethylcellulose, polyacrylic acid, polyvinyl alcohol, or a combination thereof, and the fourth polymeric binder is selected from the group consisting of a styrene-butadiene rubber, a butyl rubber, a fluorine rubber, polytetrafluoroethylene, polyethylene, polypropylene, ethylene propylene copolymer, polyvinylpyrrolidone, polyepichlorohydrine, polyphosphazene, polystyrene, ethylene propylene diene copolymer, polyvinylpyridine, chlorosulfonated polyethylene, latex, a polyester resin, a phenolic resin, an epoxy resin, or a combination thereof, and wherein the amount of the second polymeric binder present at a surface portion of the coating layer is greater than at an inner portion of the coating layer or the amounts of the fourth polymeric binder at a surface portion of the coating layer is greater than at an inner portion of the coating layer.

The first and second polymeric binders may preferably be an emulsion, suspension or colloidal polymeric binder. In a preferred embodiment the liquid phase of the above binders comprises water, preferably the liquid phase essentially consists of water, e.g. 95%-100% by weight, preferably the liquid phase consists of water. In a preferred embodiment the polymeric binder is present in the liquid at a concentration of between 20% and 50% by weight of the total weight of polymer and liquid phase, preferably between 30% and 40% by weight.

The polymeric binder, preferably an emulsion polymeric binder, may preferably include a diene-based polymer, an acrylate-based polymer, a styrene-based polymer, a urethane-based polymer, a polyolefin-based polymer, or a combination thereof.

The polymeric binder, preferably an emulsion polymeric binder, may preferably include a styrene-butadiene rubber, an acrylated styrene-butadiene rubber, an acrylonitrile-butadiene rubber, an acrylonitrile-butadiene-styrene rubber, an acrylic rubber, a butyl rubber, a fluorine rubber, polytetrafluoroethylene, polyethylene, polypropylene, ethylene propylene copolymer, polyethyleneoxide, polyvinylpyrrolidone, polyepichlorohydrine, polyphosphazene, polyacrylate, polyacrylonitrile, polystyrene, ethylene propylene diene copolymer, polyvinylpyridine, chlorosulfonated polyethylene, latex, a polyester resin, an acrylic resin, a phenolic resin, an epoxy resinpolyvinylalcohol, carboxylmethylcellulose, hydroxypropylmethylcellulose, hydroxypropylcellulose, diacetylcellulose, or a combination thereof.

The first polymeric binder may preferably be included in a greater amount than the second polymeric binder. The first and second polymeric binders are preferably independently selected from the binders discussed above.

The first and second polymeric binder may preferably be respectively included in an amount of about 70 to 99 parts by weight and about 1 to 30 parts by weight based on the total weight of the polymeric binder.

The solvent-soluble polymeric binder may preferably be more included than the emulsion polymeric binder.

The solvent-soluble polymeric binder and the emulsion polymeric binder may preferably be respectively included in an amount of about 70 to 99 parts by weight and about 1 part by weight to 30 parts by weight based on the total weight of the polymeric binder.

The polymeric binder may preferably be included in an amount of about 1 to 30 parts by weight based on 100 parts by weight of the inorganic compound.

The inorganic compound may preferably include metal oxide, semi-metal oxide, metal fluoride, metal hydroxide, or a combination thereof.

The inorganic compound may preferably include Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, or a combination thereof.

The porous substrate may preferably include a glass fiber, polyester, TEFLON (tetrafluoroethylne), polyolefin, polytetrafluoroethylene (PTFE), or a combination thereof.

According to another embodiment, provided is a method of manufacturing the separator including applying a slurry including an inorganic compound and a polymeric binder on at least one side of a porous substrate and drying the slurry at a rate of 30 to 70%/min.

The drying rate may preferably be in a rage of about 40 to 60%/min. In a preferred embodiment, the drying rate is measured by the gravimetric method.

According to another embodiment, provided is a rechargeable lithium battery that includes a positive electrode including a positive active material, a negative electrode including a negative active material, an electrolyte, and the separator interposed between the positive electrode and the negative electrode.

The coating layer may preferably have a first side in contact with either one of the positive and negative electrodes and a second side in contact with the porous substrate.

The first side may preferably include the polymeric binder more than the second side.

Therefore, the separator may have better adhesive property to the electrode and thus, improve characteristics of a battery as well as secure stability of the battery.

### BRIEF DESCRIPTION OF THE DRAWINGS

FIG. 1 is a cross-sectional view showing a separator for a rechargeable lithium battery according to one embodiment.
FIG. 2 is an enlarged schematic view showing a coating layer of the separator illustrated in FIG. 1.
FIGS. 3 and 4 are schematic views respectively showing a method of forming a coating layer on the separator of FIG. 1.
FIG. 5 is an exploded perspective view showing a rechargeable lithium battery according to one embodiment.
FIG. 6 is a SEM photograph showing the separator according to Example 2.
FIG. 7 is a SEM photograph showing the surface of the coating layer on the separator according to Example 2.
FIG. 8 is a SEM photograph showing the surface of the coating layer on the separator according to Comparative Example 3.
FIG. 9 is a drawing showing the mapping analysis of fluorine atom at the cross section of the coating layer of the separator.

### DETAILED DESCRIPTION

The present invention will be described more fully hereinafter, in which exemplary embodiments of the invention are shown. As those skilled in the art would realize, the described embodiments may be modified in various different ways, all without departing from the scope of the present invention.

Hereinafter, referring to drawings, a separator for a rechargeable lithium battery according to one embodiment is described.

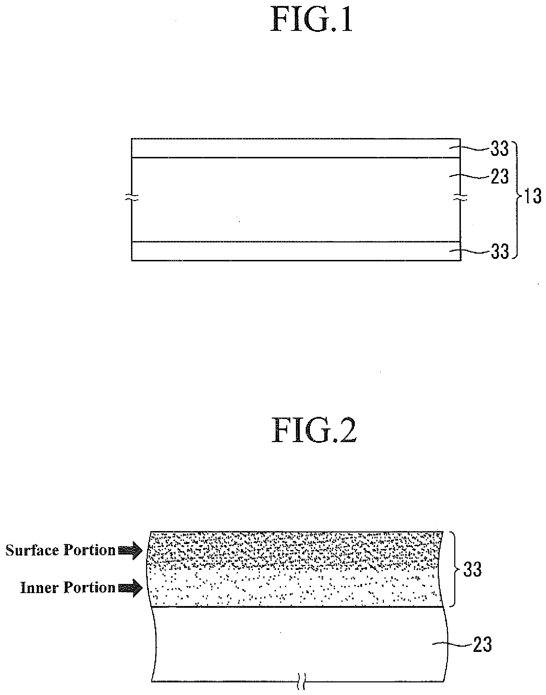

FIG. 1 is a cross-sectional view of a separator for a rechargeable lithium battery according to one embodiment.

The separator 13 includes a substrate, which is preferably porous, 23 and a coating layer 33 disposed on one side or both sides of the porous substrate 23.

The porous substrate 23 may preferably include, for example a glass fiber, polyester, TEFLON (tetrafluoroethylne), polyolefin, polytetrafluoroethylene (PTFE), or a combination thereof. The polyolefin may preferably include, for example polyethylene, polypropylene, and the like.

The porous substrate 23 may preferably be a single layer or a multilayer such as a mixed multilayer, for example a polyethylene/polypropylene double separator, a polyethylene/polypropylene/polyethylene triple separator, a polypropylene/polyethylene/polypropylene triple separator, and the like.

The coating layer 33 preferably includes an inorganic compound and a polymeric binder.

The inorganic compound is preferably a ceramic material being capable of improving heat resistance, and may preferably include, for example metal oxide, semi-metal oxide, metal fluoride, metal hydroxide, or a combination thereof. The inorganic compound may preferably include for example Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, or a combination thereof.

The inorganic compound may improve heat resistance of a coating layer and thus, prevent abrupt contraction or transformation of the separator according to temperature increase.

The inorganic compound may preferably be a particle and for example, have a particle diameter ranging from about 1nm to 1000nm. The particle diameter may preferably be in a range of about 10nm to 800nm and specifically, about 200 to 600nm within the range. The inorganic compound having a particle diameter within the range may apply appropriate strength to the coating layer 33.

The polymeric binder may play a role of fixing the inorganic compound on a porous substrate 23 and simultaneously, may provide strong adherence to adhere to the porous substrate 23 at one side of the coating layer 33 and to the electrode (not shown) at the other side of the coating layer.

Herein, the amount of the polymeric binder is greater at the surface of the coating layer 33 than the amount of the polymeric binder inside the coating layer 33. Herein, the surface of the coating layer 33 may preferably be a portion contacting with the electrode.

In a preferred embodiment of the present invention the surface portion comprises between about 50% and 25% of the thickness of the coating layer, preferably about 30% to 40%, the remainder being the inner portion of the coating layer.

In an embodiment of the present invention the coating layer, post drying, is preferably between about 1.5 and 5 microns in thickness, more preferably between about 2 and 4 microns.

FIG. 2 is an enlarged schematic view showing a coating layer of the separator illustrated in FIG. 1.

In FIG. 2, where the polymeric binder is more included in the coating layer 33 is marked dark, while where the polymeric binder is relatively less included in the coating layer 33 is marked light, for better comprehension and ease of description.

Referring to FIG. 2, the polymeric binder is more included at the surface of the coating layer 33 than the inside of the coating layer 33. When the polymeric binder is more included at the surface of the coating layer 33, the separator may be better adhered to the electrode.

Accordingly, since the coating layer 33 includes the polymeric binder at the surface without decreasing the inorganic compound all over the coating layer, the separator having the coating layer 33 may be well adhered to an electrode. Accordingly, the coating layer 33 may secure heat resistance and adherence simultaneously.

Hereinafter, a method of forming the coating layer 33 is illustrated referring to drawings.

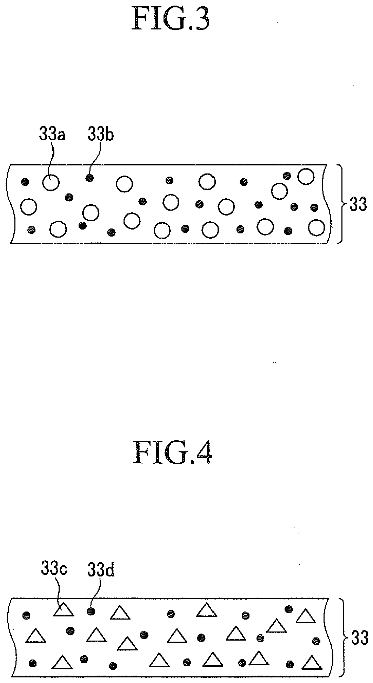

FIGS. 3 and 4 are schematic views respectively showing a method of forming a coating layer of the separator of FIG. 1.

According to an embodiment of a method of forming a coating layer, referring to FIG. 3 along with FIG. 1, a slurry including an inorganic compound (not shown), a first polymeric binder 33a having a first average particle diameter, and a second polymeric binder 33b having a second average particle diameter of less than or equal to 80% of the first average particle diameter, specifically, less than or equal to about 50% thereof is coated on one side of a porous substrate 23.

In a preferred embodiment of the present invention the average particle diameter of the second polymeric binder is between 80% and 20% of the average particle diameter of the first polymeric binder, more preferably between about 50% and 25%, and more preferably between about 40% and 30%.

Herein, the first average particle diameter may preferably be in a range of 50nm to 500 nm, and the second average particle diameter may preferably be in a range of 20nm to 400 nm.

In an embodiment of the present invention the first average particle diameter may preferably be in a range of about 60nm to about 200 nm, more preferably about 70nm to about 150nm and more preferably about 75nm to about 100nm. In an embodiment of the present invention the second average particle diameter may preferably be in a range of about 25nm to about 200 nm, more preferably about 25nm to about 80nm and more preferably about 27nm to about 50nm. When the first and second polymeric binders have an average particle diameter within the above ranges, a polymer emulsion may preferably have appropriate viscosity and sufficient adhesive property.

In an embodiment of the present invention the first polymeric binder 33a is a main polymeric binder fixing the inorganic compound on the substrate, preferably porous, 23, and the second polymeric binder 33b is an auxiliary polymeric binder increasing adhesive property. The first and second polymeric binders 33a and 33b may preferably be respectively included in an amount of 70 to 99 parts by weight and 1 to 30 parts by weight based on the total weight of the polymeric binder. In a preferred embodiment of the present invention the first and second polymeric binders are included in an amount of about 80 to 95 parts by weight and about 5 to 20 parts by weight, respectively, based on the total weight of the binder polymer, more preferably about 80 to 90 parts by weight and about 10 to 20 parts by weight. These weights are based on the dry weight of the polymeric binders. When the first and second polymeric binders 33a and 33b are included within the range, the coating layer may be sufficiently adhered to the substrate, and while the separators may be prevented from being stuck together due to extreme stickiness at the surface of the coating layer.

As the slurry is dried, the polymeric binder and the inorganic compound in the coating layer may move toward the surface of the coating layer due to a thermal convection, since the surface of the coating layer may be dried earlier than the inside. The second polymeric binder 33b having a smaller average particle diameter may more easily move toward the surface of the coating layer. Accordingly, the first and second polymeric binders are more included at the surface and may increase the surface adhesive property of the coating layer 33.

In an embodiment of the present invention the first polymeric binder 33a and the second polymeric binder 33b may preferably be an emulsion-type, suspension or colloidal polymeric binder and also, the same or different. The polymeric binder, preferably an emulsion polymeric binder, may preferably include for example a diene-based polymer, an acrylate-based polymer, a styrene-based polymer, an urethane-based polymer, a polyolefin-based polymer, or a combination thereof, for example a styrene-butadiene rubber, an acrylated styrene-butadiene rubber, an acrylonitrile-butadiene rubber, an acrylonitrile-butadiene-styrene rubber, an acrylic rubber, a butyl rubber, a fluorine rubber, polytetrafluoroethylene, polyethylene, polypropylene, ethylene propylene copolymer, polyethyleneoxide, polyvinylpyrrolidone, polyepichlorohydrine, polyphosphazene, polyacrylate, polyacrylonitrile, polystyrene, ethylene propylene diene copolymer, polyvinylpyridine, chlorosulfonated polyethylene, latex, a polyester resin, an acrylic resin, a phenolic resin, an epoxy resin, polyvinylalcohol, carboxylmethylcellulose, hydroxypropylmethylcellulose, hydroxypropylcellulose, diacetylcellulose, a polyurethane, or a combination thereof.

The emulsion-type polymeric binder may preferably be prepared by emulsion polymerization or a phase inversion method using a polymerizable monomer. The emulsion polymerization method and phase inversion method have no particular limited conditions.

In a preferred embodiment of the present invention the first polymeric binder is selected from the group consisting of a styrene-butadiene rubber, an acrylated styrene-butadiene rubber, an acrylonitrile-butadiene rubber, and an acrylonitrile-butadiene-styrene rubber or a combination thereof. In a preferred embodiment of the present invention the second polymeric binder is a urethane-based polymer, preferably polyurethane.

The polymerizable monomer may preferably include, for example an ethylenic unsaturated carbonic acid alkyl ester such as methyl (meth)acrylate, butyl (meth)acrylate, ethyl (meth)acrylate, hexyl(meth)acrylic acid-2-ethyl, and the like; an ethylenic unsaturated monomer having a cyano group such as acrylonitrile, metacrylonitrile, fumaronitrile, α-chloro acrylonitrile, α-cyanoethylacrylonitrile, and the like; a conjugated diene monomer such as 1,3-butadiene, isoprene, 2,3-dimethyl-1, 3-butadiene, 2-ethyl-1, 3-butadiene, 1,3-pentadiene, chloroprene, and the like; ethylenic unsaturated carboxylic acid and a salt thereof such as acrylic acid, methacrylic acid, maleic acid, fumaric acid, citraconic acid, and the like; an aromatic vinyl monomer such as styrene, alkyl styrene, vinyl naphthalene, and the like; a fluorine alkyl vinyl ether such as fluorine ethyl vinyl ether, and the like; a non-conjugated diene monomer such as vinyl pyridine; α-olefin such as ethylene, propylene, and the like; an ethylenic unsaturated amide monomer such as (meth)acryl amide; a sulfonic acid-based unsaturated monomer such as acryl amide methyl propane sulfonic acid, styrene sulfonic acid, and the like; and the like.

In addition, the polymerizable monomer may preferably include a polymerizable monomer having a cross-linking functional group. The cross-linking functional group is a functional group working as a cross-linking point when the polymeric binder is cross-linked and may preferably include, for example, a hydroxyl group, a glycidyl group, an amino group, an N-methanol group, a vinyl group, and the like.

The polymerizable monomer including the cross-linking functional group may preferably include, for example hydroxy ester of ethylenic unsaturated carboxylic acid such as (meth) acrylic acid hydroxy propyl, (meth) acrylic acid hydroxy ethyl, and the like; glycidyl ester of ethylenic unsaturated carboxylic acid such as glycidyl(meth) acrylate, and the like; amino ester of ethylenic unsaturated carboxylic acid such as dimethyl amino ethyl(meth) acrylate, and the like; a methylol group-containing ethylenic unsaturated amide such as N-methylol(meth) acryl amide, N,N-dimethylol(meth) acryl amide, and the like; a monomer including at least two vinyl groups such as ethylene di(meth) acrylate, divinyl benzene, and the like.

The polymerizable monomer including the cross-linking functional group may preferably be included in an amount of less than or equal to about 5wt%, specifically, less than or equal to about 2wt% based on the total weight of the polymerizable monomer.

In an embodiment of the present invention the coating layer comprises a third polymeric binder and a fourth polymeric binder, wherein the third polymeric binder is soluble in a solvent which the fourth polymeric binder is insoluble in and the amounts of the third or fourth polymeric binders present at a surface portion of the coating layer are greater than at an inner portion of the coating layer.

In a preferred embodiment of the present invention the fourth polymeric binder is an emulsion, suspension or colloidal polymeric binder. In a preferred embodiment the liquid phase of the above binders comprises water, preferably the liquid phase essentially consists of water, e.g. 95%-100% by weight, preferably the liquid phase consists of water. In a preferred embodiment the polymeric binder is present in the liquid at a concentration of between 20% and 50% by weight of the total weight of polymer and liquid phase, preferably between 30% and 40% by weight.

According to another embodiment of a method of forming a coating layer, referring to FIG. 4 along with FIG. 1, slurry including an inorganic compound (not shown), a solvent-soluble polymeric binder as a third polymeric binder 33c, a polymeric binder, preferably an emulsion polymeric binder, as a fourth polymeric binder 33d, and a solvent may be coated on one side of the porous substrate 23.

The third polymeric binder 33c is a solvent-soluble polymeric binder and is preferably a main polymeric binder. The solvent-soluble polymeric binder is a polymeric binder dissoluble in a solvent, and includes polyvinylidene fluoride (PVdF), polyvinylidene fluoride-hexafluoropropylene (PVdF-co-HFP), polyvinylidene fluoride-trichloroethylene, polyvinylpyrrolidone, polyethyleneoxide (PEO), polyacrylonitrile (PAN), polyimide (PI), polyamic acid (PAA), polyamideimide (PAI), aramid, polyvinylacetate (PVA), an ethylenevinylacetate copolymer, an ethyleneethylacrylate copolymer, polymethylmetaacrylate (PMMA), polyvinylether (PVE), carboxylmethylcellulose, polyacrylic acid, polyvinyl alcohol, or a combination thereof.

The fourth polymeric binder 33d is an emulsion polymeric binder, which exists as a particulate in a solvent, and the fourth polymeric binder is an auxiliary polymeric binder. The fourth polymeric binder, an emulsion polymeric binder, includes a styrene-butadiene rubber, a butyl rubber, a fluorine rubber, polytetrafluoroethylene, polyethylene, polypropylene, ethylene propylene copolymer, polyvinylpyrrolidone, polyepichlorohydrine, polyphosphazene, polystyrene, ethylene propylene diene copolymer, polyvinylpyridine, chlorosulfonated polyethylene, latex, a polyester resin, a phenolic resin, an epoxy resin, or a combination thereof.

In a preferred embodiment of the present invention the third polymeric binder is selected from the group consisting of polyvinylidene fluoride (PVdF), polyvinylidene fluoride-hexafluoropropylene (PVdF-co-HFP), polyvinylidene fluoride-trichloroethylene, and polyvinylpyrrolidone or a combination thereof. In a preferred embodiment of the present invention the fourth polymeric binder is selected from the group consisting of a styrene-butadiene rubber, a polyurethane, or a combination thereof.

As the third polymeric binder is soluble in a solvent which the fourth polymeric binder is not soluble in, although certain of the above preferred embodiments of these polymers do overlap, these polymeric binders cannot be the same, i.e. the third polymeric binder must be soluble in a solvent in which the fourth polymeric binder is not.

The third polymeric binder 33c and the fourth polymeric binder 33d may preferably be respectively included in an amount of 70 to 99 parts by weight and 1 to 30 parts by weight based on the total weight of the polymeric binder. In a preferred embodiment of the present invention the third and fourth polymeric binders are included in an amount of about 85 to 99 parts by weight and about 1 to 15 parts by weight, respectively, based on the total weight of the binder polymer, more preferably about 90 to 98 parts by weight and about 2 to 10 parts by weight. These weights are based on the dry weight of the polymeric binders.

When the third polymeric binder 33c and the fourth polymeric binder 33d are included within the range, the coating layer may be sufficiently adhered to a porous substrate, and while the separators may be prevented from being stuck together due to excessive stickiness.

As the slurry is dried, the solvent may move toward the surface of the coating layer due to a thermal convection, since the surface of the coating layer may be dried earlier than the inside thereof. Herein, the polymeric binder may move toward the surface of the coating layer, along with the solvent. Herein, the fourth polymeric binder existing as particulates in a solvent may more easily move to the surface. Accordingly, the third and fourth polymeric binders may exist more at the surface than the inside and increase adhesive property of the coating layer 33 at the surface.

Furthermore, a solvent-soluble third polymeric binder along with the fourth polymeric binder exists at the surface of the coating layer 33 and may increase adhesive property of the coating layer to a negative active material layer including an emulsion polymeric binder such as a styrene-butadiene rubber as a binder as well as to a positive active material layer including a solvent-soluble polymeric binder such as polyvinylidene fluoride (PVdF) as a binder. Accordingly, the separator having the coating layer 33 may have high adhesive property to both positive and negative electrodes.

The polymeric binder may preferably be included in an amount of 1 to 30 parts by weight based on 100 parts by weight of the inorganic compound. The first and second polymeric binders may preferably be included in a total amount of about 2 to 10 parts by weight, more preferably in an amount of about 2.5 to 7.5 parts by weight. The third and fourth polymeric binders may preferably be included in a total amount of about 5 to 25 parts by weight, more preferably in an amount of about 10 to 20 parts by weight.

When the binder is included within the above ranges, the coating layer may preferably improve adhesive property of the separator to a porous substrate and an electrode and while may not close pores in the porous substrate and maintain ion conductivity.

Hereinafter, a method of fabricating the separator is illustrated.

According to one embodiment, the method of manufacturing a separator may include applying slurry including an inorganic compound and a polymeric binder on at least one side of a substrate, preferably porous, and drying the slurry to form a coating layer.

As described above, the polymeric binder may preferably be a mixture of the polymeric binders having a different particle size or a mixture of a third solvent-soluble polymeric binder and a fourth polymeric binder, preferably emulsion polymeric binder.

When the binder contains a third solvent-soluble binder, it is preferably pre-mixed with a solvent prior to formation of the slurry containing the third and fourth polymeric binders. The solvent is selected from the group consisting of N-methyl-2-pyrrolodone, dimethyl formamide, dimethyl acetamide, tetramethyl urea, triethyl phosphate, dimethyl sulfoxide, acetone, methyl ethyl ketone, methyl isobutyl ketone, cyclohexanone, or a combination thereof

The slurry may preferably be dried in a method of, for example, hot air drying, infrared drying, and the like at a drying rate of 30 to 70%/min.

Herein, the drying rate refers to a speed of drying 30 to 70% of a solvent in the slurry per minute based on the original amount of solvent present in slurry applied to form the coating layer. This may be calculated based on drying temperature, the amount of provided air, the amount of discharged air, an air speed, a heating method, and the like.

The drying temperature may depend on a solvent and a drying atmosphere. The drying temperature may preferably generally range from about 45°C to about 110°C, preferably about 50°C to about 90°C, and more preferably about 60°C to about 80°C. When the drying is performed in the temperature, it is possible to dry a solvent and prevent the porous substrate from contracting.

When the drying rate is within the range, the polymeric binder sufficiently moves toward the surface of the coating layer as aforementioned, and the surface of the coating layer may be prevented from crack or transformation due to rapid drying.

The drying may preferably be performed at a rate of about 40 to 60%/min within the range, more preferably about 45 to 55%/min.

Hereinafter, a rechargeable lithium battery including the separator is described.

The rechargeable lithium battery may be classified as a lithium ion battery, a lithium ion polymer battery, and a lithium polymer battery according to the presence of a separator and the kind of an electrolyte used therein. The rechargeable lithium battery may have a variety of shapes and sizes and thus, may include a cylindrical, prismatic, coin, or pouch-type battery and a thin film type or a bulky type in size. The structure and fabricating method for a lithium ion battery pertaining to the present invention are well known in the art.

The separator has a coating layer including a polymeric binder and thus, improved adherence and particularly, may be stably adhered to an electrode and thus, have no gap due to detachment from the electrode but be firmly fixed together.

The average particle size (D50) of the polymeric binders used in the present invention, may preferably be measured using a laser diffraction light scattering diameter distribution measurement method. Preferably, a Mastersizer 2000 (Malvern Instruments) laser diffractometer is used. The Mastersizer 2000 calculates the particle size distribution (and therefore the 50th percentile of this distribution - the D50) by volume as a default setting. This is the primary result calculation using Mie theory. When carrying out the measurement of the above parameters using a Mastersizer 2000 preferably a dispersant is used, preferably water (preferably 99.9% purity) is used as the dispersant. If water is used as a dispersant, the relative refractive index of water is taken as between 1.30 and 1.35, preferably 1.33. The particle refractive index is dependent on the polymeric binder being used and these values are readily available in the art. For example, for a styrene-butadiene rubber the refractive index is preferably between 1.8 and 3.90 and for a polyurethane the refractive index is preferably between 1.20 and 2.50. Preferably, sonication for between 1 and 3 minutes, preferably 2 minutes, to aid dispersion is carried out. Sonication is preferably carried out between 1kHz and 10KHz, preferably at 5kHz. The absorption index value is preferably set between 0.5 and 1.5, preferably a value of 1.0 is used.

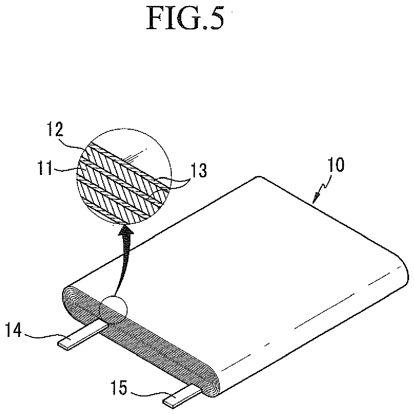

FIG. 5 is an exploded perspective view of a rechargeable lithium battery according to one embodiment.

Referring to FIG. 5, a rechargeable lithium battery includes a jelly roll-type electrode assembly 10 and a case (not shown).

The electrode assembly 10 may have a jelly roll shape formed by winding a negative electrode 11 and a positive electrode 12 and a separator 13 therebetween. The negative electrode 11, positive electrode 12, and separator 13 may be impregnated in an electrolyte (not shown).

The negative electrode 11 includes a current collector and a negative active material layer disposed on the current collector.

The current collector may be a copper foil, a nickel foil, a stainless steel foil, a titanium foil, a nickel foam, a copper foam, a polymer substrate coated with a conductive metal, or combinations thereof.

The negative active material layer includes a negative active material, a binder, and optionally a conductive material.

The negative active material includes a material that reversibly intercalates/deintercalates lithium ions, a lithium metal, an alloy of lithium metal, a material being capable of doping and dedoping lithium, or a transition metal oxide.

The material that reversibly intercalates/deintercalates lithium ions includes carbon materials. The carbon material may be any generally-used carbon-based negative active material in a lithium ion rechargeable battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon (carbon obtained by sintering at a low temperature), a hard carbon, a mesophase pitch carbonized product, fired coke, and the like.

The alloy of lithium metal includes lithium and a metal of Na, K, Rb, Cs, Fr, Be, Mg, Ca, Sr, Si, Sb, Pb, In, Zn, Ba, Ra, Ge, Al, or Sn.

The material being capable of doping and dedoping lithium may include Si, SiOₓ (0 < x < 2), a Si-C composite, a Si-Q alloy (wherein Q is an element selected from the group consisting of an alkali metal, an alkaline-earth metal, Group 13 to 16 elements, a transition element, a rare earth element, and a combination thereof, and not Si), Sn, SnO₂, a Sn-C composite, Sn-R (wherein R is an element selected from the group consisting of an alkali metal, an alkaline-earth metal, Group 13 to 16 elements, a transition element, a rare earth element, and combinations thereof and is not Sn), and the like. The Q and R may be an element of, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide includes vanadium oxide, lithium vanadium oxide, and the like.

The binder improves binding properties of the negative active material particles to one another and to a current collector. Examples of the binder include polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent, unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The positive electrode 12 includes a current collector and a positive active material layer disposed on the current collector.

The current collector may be Al, but is not limited thereto.

The positive active material layer may include a positive active material, a binder, and optionally a conductive material.

The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used:
LiₐA_{1-b}R_{b}D₂ (wherein, in the above formula, 0.90 ≤ a ≤ 1.8 and 0 ≤ b ≤ 0.5); LiₐE_{1-b}R_{b}O_{2-c}D_{c} (wherein, in the above formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above formula, 0 ≤ b ≤ 0.5, 0 ≤ c ≤ 0.05); LiₐNi_{1-b-c}Co_{b}R_{c}Dₐ (wherein, in the above formula, 0.90 ≤ a ≤ 1.8, 0 ≤ b ≤ 0.5, 0 ≤ c ≤ 0.05 and 0 < a ≤ 2); LiₐNi_{1-b-c}Co_{b}R_{c}O_{2-α}Z_{α} (wherein, in the above formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O₂₋ₐZ₂ (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein, in the above formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O₂₋ₐZₐ (wherein, in the above formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above formula, 0.90 ≤ a ≤ 1.8, 0 ≤ b ≤ 0.9,0 ≤ c ≤ 0.5,0 ≤ d ≤ 0.5 and 0.001 ≤ e ≤ 0.1); LiₐNiG_{b}O₂ (wherein, in the above formula, 0.90 ≤ a ≤ 1.8 and 0.001 ≤ b ≤ 0.1); LiₐCoG_{b}O₂ (wherein, in the above formula, 0.90 ≤ a ≤ 1.8 and 0.001 ≤ b ≤ 0.1); LiₐMnG_{b}O₂ (wherein, in the above formula, 0.90 ≤ a ≤ 1.8 and 0.001 ≤ b ≤ 0.1); LiₐMn₂G_{b}O₄ (wherein, in the above formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The compound may have a coating layer on the surface or be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like but is not illustrated in more detail, since it is well-known to those who work in the related field.

The binder improves binding properties of the positive active material particles to one another and to a current collector. Examples of the binder may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material may be used as a conductive agent, unless it causes a chemical change. For example, it may include natural graphite, artificial graphite, carbon black, acetylene black, ketjen black, carbon fiber, metal powder, metal fiber or the like such as copper, nickel, aluminum, silver or the like, or one or at least one kind of mixture of conductive material such as polyphenylene derivative or the like.

The negative electrode 11 and positive electrode 12 may be fabricated in a method of mixing the active material, a conductive material, and a binder with an active material slurry and coating the slurry on a current collector, respectively. The solvent may include N-methylpyrrolidone and the like but is not limited thereto. The electrode-manufacturing method is well known and thus, is not described in detail in the present specification.

The negative electrode 11 and positive electrode 12 are connected with a negative lead tab 14 and a positive lead tab 15, respectively, and the negative lead tab 14 and positive lead tab 15 are drawn out from the same side of an electrode assembly 10.

The electrolyte includes a non-aqueous organic solvent and a lithium salt.

The non-aqueous organic solvent serves as a medium of transmitting ions taking part in the electrochemical reaction of a battery.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and the ester-based solvent may include methyl acetate, ethyl acetate, n-propyl acetate, 1,1-dimethylethyl acetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran and the like. The ketone-based solvent may include cyclohexanone, and the like. The alcohol-based solvent may include ethanol, isopropylalcohol, and the like. The aprotic solvent include nitriles such as R-CN(wherein R is a C2 to C20 linear, branched, or cyclic hydrocarbon group, and may include a double bond, an aromatic ring, or an ether bond), amides such as dimethylformamide, dimethylacetamide, dioxolanes such as 1,3-dioxolane, sulfolanes, and the like.

The non-aqueous organic solvent may be used singularly or in a mixture. When the organic solvent is used in a mixture, its mixture ratio can be controlled in accordance with desirable performance of a battery.

The carbonate-based solvent may include a mixture of a cyclic carbonate and a linear carbonate. The cyclic carbonate and the linear carbonate are mixed together in a volume ratio of about 1 : 1 to about 1 : 9 as an electrolyte, the electrolyte may have enhanced performance.

In addition, the electrolyte may be prepared by further adding the aromatic hydrocarbon-based solvent to the carbonate-based solvent. The carbonate-based solvent and the aromatic hydrocarbon-based solvent are mixed together in a volume ratio of about 1 : 1 to about 30 : 1.

The aromatic hydrocarbon-based organic solvent may be an aromatic hydrocarbon-based compound represented by the following Chemical Formula 1.

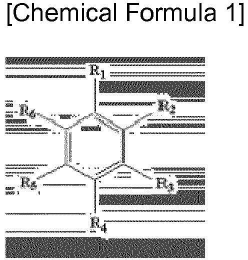

In Chemical Formula 1, R₁ to R₆ are each independently hydrogen, halogen, a C1 to C10 alkyl group, a C1 to C10 haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate or an ethylene carbonate-based compound represented by the following Chemical Formula 2 in order to improve cycle-life of a battery.

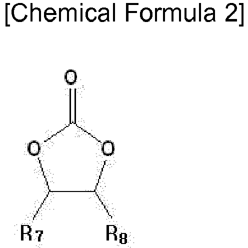

In Chemical Formula 2, R₇ and R₈ are each independently hydrogen, a halogen, a cyano group (CN), a nitro group (NO₂) or a C1 to C5 fluoroalkyl group, provided that at least one of R₇ and R₈ is a halogen, a cyano group (CN), a nitro group (NO₂) or a C1 to C5 fluoroalkyl group.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The use amount of the vinylene carbonate or the ethylene carbonate-based compound for improving cycle life may be adjusted within an appropriate range.

The lithium salt is dissolved in the non-aqueous solvent and supplies lithium ions in a rechargeable lithium battery, and basically operates the rechargeable lithium battery and improves lithium ion transfer between positive and negative electrodes. The lithium salt include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, LiI, LiB(C₂O₄)₂ (lithium bis(oxalato) borate, LiBOB), or a combination thereof which is used as a supporting electrolytic salt. The lithium salt may be used in a concentration of about 0.1 to about 2.0M. When the lithium salt is included within the above concentration range, it may electrolyte performance and lithium ion mobility due to optimal electrolyte conductivity and viscosity.

The separator 13 plays a role of separating a negative electrode 112 from a positive electrode 114 and providing a path for lithium ions and includes a porous substrate and a coating layer as described above. The separator is the same as described.

The following examples illustrate the present invention in more detail. These examples, however, should not in any sense be interpreted as limiting the scope of the present invention.

### Fabrication of Separator

### Example 1

3 parts by weight of a styrene-butadiene rubber (SBR) (based on the dry weight of an aqueous emulsion containing the rubber) having an average particle diameter of about 80nm based on 100 parts by weight of alumina particulates was dispersed, and 0.5 parts by weight of an urethane emulsion (based on the dry weight of an aqueous emulsion containing the polymer) having an average particle diameter of about 30nm is added thereto, preparing slurry. The slurry was coated to be 16µm thick on both sides of a polyethylene substrate and dried at a drying rate of 50%/min (as measured by the gravimetric method), fabricating a separator having a about 3µm-thick coating layer.

### Example 2

10 parts by weight of polyvinylidene fluoride (PVdF) dissolved in N-methyl-2-pyrrolodone (NMP) are mixed with 100 parts by weight of alumina particulates, and 0.5 parts by weight of a styrene-butadiene rubber (SBR) (based on the dry weight of an aqueous emulsion containing the rubber) (an average particle diameter of about 80nm) was added thereto. The mixture was agitated, preparing slurry. The slurry was coated to be 16µm thick on both sides of a polyethylene substrate and dried at a drying rate of 50%/min (as measured by the gravimetric method), fabricating a separator having an about 3 µm-thick coating layer.

### Comparative Example 1

A separator was fabricated according to the same method as Example 1 except for using no urethane emulsion.

### Comparative Example 2

A separator was fabricated according to the same method as Example 1 except for adding no styrene-butadiene rubber (SBR).

### Comparative Example 3

A separator was fabricated according to the same method as Example 2 except for performing the drying at a drying rate of 20%/min (as measured by the gravimetric method).

### Analysis 1: Examination of Cross-section and Surface of Separator

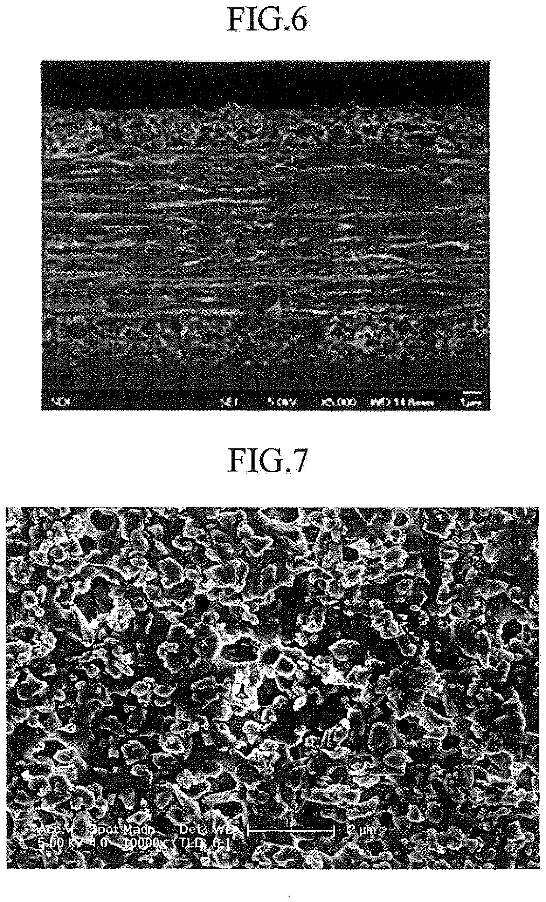

FIG. 6 is the SEM photograph of the separator according to Example 2.

Referring to FIG. 6, the separator according to Example 2 had a coating layer having a predetermined thickness on both sides thereof.

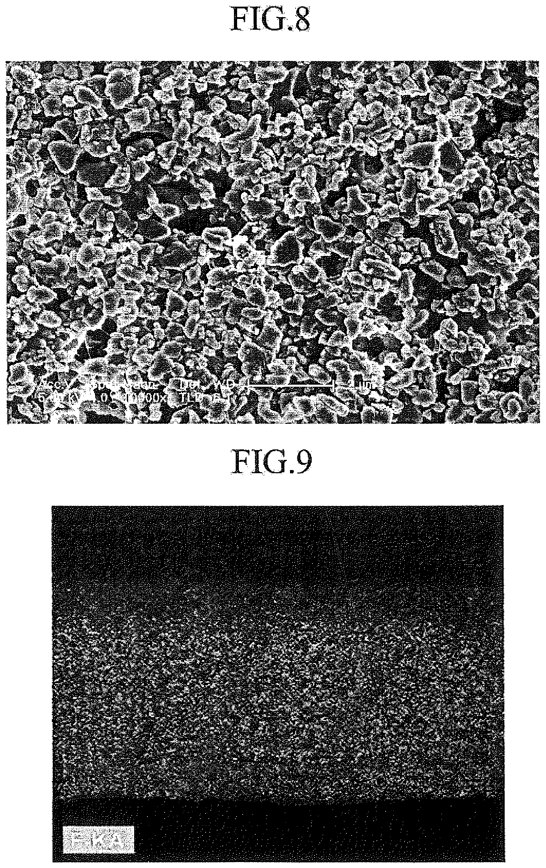

FIG. 7 is a SEM photograph showing the surface of the coating layer on the separator according to Example 2, while FIG. 8 is a SEM photograph showing the surface of the coating layer on the separator according to Comparative Example 3.

Referring to FIGS. 7 and 8, more polymeric binders are distributed at the surface of the coating layer of the separator according to Example 2 than at the surface of the coating layer of the separator according to Comparative Example 3.

### Analysis 2: Distribution of Polymeric binder

The separator according to Example 2 was mapping-analyzed to examine distribution of a styrene-butadiene rubber (SBR), a particulate polymeric binder.

The mapping analysis was performed by an energy dispersive X-Ray spectroscopy (EDS) method.

In order to examine distribution of a styrene-butadiene rubber (SBR) in the coating layer, the separator was fabricated according to the same method as Example 2 except for using the alumina particulates in Example 2,.

FIG. 9 is a drawing that shows mapping analysis of fluorine atom at the cross section of the coating layer of the separator.

Referring to FIG. 9, the top (surface) of the coating layer included less fluorine atoms than the bottom (near to a polyethylene substrate) of the coating layer. The analysis result shows that styrene-butadiene rubbers (SBR) including no fluorine atom more exist at the surface of a coating layer, since more styrene-butadiene rubbers (SBR) move toward the surface during the drying of the coating layer.

### Evaluation 1: Thermal Shrinkage Ratio

The separators according to Examples 1 and 2 and Comparative Examples 1 to 3 were heat-treated in a 130°C convention oven for 10 minutes and cooled down to room temperature. The separators were measured regarding shrinkage ratio before and after the heat treatment.

The results are provided in Table 1.

**[Table 1]**

| | Thermal shrinkage ratio |
|---|---|
| Example 1 | ○ |
| Example 2 | ⊚ |
| Comparative Example 1 | ○ |
| Comparative Example 2 | ⊚ |
| Comparative Example 3 | ○ |

| | |
|---|---|
| * ⊚: Thermal shrinkage ratio is less than or equal to 3% * ○: Thermal shrinkage ratio is larger than 3% and less than or equal to 5% * Δ: Thermal shrinkage ratio is larger than 5% and less than or equal to 7% * X: Thermal shrinkage ratio is larger than 7 % | |

Referring to Table 1, the separators according to Examples 1 and 2 had a similar thermal shrinkage ratio to the ones according to Comparative Examples 1 to 3. Accordingly, a polymeric binder, that is, a urethane emulsion or styrene-butadiene rubber (SBR) included in Examples 1 and 2 turned out to have no influence on heat resistance.

### Fabrication of Rechargeable Lithium Battery Cell

### Example 3

A positive active material slurry was prepared by mixing LiCoO₂ as a positive active material, polyvinylidene fluoride (PVDF) as a binder, and carbon as a conductive agent in a weight ratio of 92:4:4 and dispersing the mixture in N-methyl-2-pyrrolidone. The slurry was coated on a 20 µm-thick aluminum foil, dried, and compressed, fabricating a positive electrode.

On the other hand, a negative active material slurry was prepared by mixing artificial graphite as a negative active material, a styrene-butadiene rubber as a binder, and carboxylmethylcellulose as a thickener in a weight ratio of 96:2:2 and dispersing the mixture into water. This slurry was coated on a 15 µm-thick copper foil, dried, and compressed, fabricating a negative electrode.

The positive and negative electrodes and the separator according to Example 1 were used to fabricate a pouch-type rechargeable lithium battery cell. An electrolyte was prepared by mixing ethyl carbonate (EC) / ethylmethylcarbonate (EMC) / diethylcarbonate (DEC) (a volume ratio of 3/5/2) and including LiPF₆ in a concentration of 1.3M.

### Example 4

A rechargeable lithium battery cell was fabricated according to the same method as Example 3 except for using the separator according to Example 2 instead of the separator according to Example 1.

### Comparative Example 3

A rechargeable lithium battery cell was fabricated according to the same method as Example 3 except for using the separator according to Comparative Example 1 instead of the separator according to Example 1.

### Comparative Example 4

A rechargeable lithium battery cell was fabricated according to the same method as Example 3 except for using the separator according to Comparative Example 2 instead of the separator according to Example 1.

### Comparative Example 5

A rechargeable lithium battery cell was fabricated according to the same method as Example 3 except for using the separator according to Comparative Example 3 instead of the separator according to Example 1.

### Evaluation 2: Adhesive Property

The rechargeable lithium battery cells according to Examples 3 and 4 and Comparative Examples 3 to 5 were decomposed and evaluated regarding adhesive property of the separators to positive and negative electrodes.

The adhesive property evaluation was measured regarding peeling strength using a universal test machine (UTM).

The results are provided in Table 2.

**[Table 2]**

| | Adherence |
|---|---|
| Example 3 | ⊚ |
| Example 4 | ⊚ |
| Comparative Example 3 | X |
| Comparative Example 4 | Δ |
| Comparative Example 5 | Δ |

| | |
|---|---|
| * ⊚: Adherence is larger than or equal to 0.03 N/mm * ○: Adherence is 0.01 to 0.02 N/mm * Δ: Adherence is 0.005 to 0.01 N/mm * X: Adherence is less than or equal to 0.005 N/mm | |

Referring to Table 2, the rechargeable lithium battery cells according to Examples 3 and 4 had improved adherence of the separators to electrodes compared with the ones according to Comparative Examples 3 to 5.

### Evaluation 3: Charge and Discharge Characteristic

The rechargeable lithium battery cells according to Examples 3 and 4 and Comparative Examples 3 to 5 were constant-current-charged at a 0.2C rate up to a voltage of 4.2V at 25° C and constant-voltage-charged up to a current of 0.01C while maintaining a voltage of 4.2V. Next, the rechargeable lithium battery cells were discharged with a constant current of 0.2C up to a voltage of 3.05V during the discharge (formation step).

Then, the rechargeable lithium battery cells were constant current charged at a 0.5C rate up to a voltage of 4.2V at 25° C and constant voltage charged up to a current of 0.01C while maintaining 4.2V. Then, the rechargeable lithium battery cells were discharged with a constant current of 0.5C up to a voltage of 3.0V. The charge and discharge cycle was 30 times repeated.

The results are provided in Table 3.

**[Table 3]**

| | Charge and discharge efficiency | Capacity retention |
|---|---|---|
| Example 3 | ⊚ | ⊚ |
| Example 4 | ⊚ | ⊚ |
| Comparative Example 3 | Δ | X |
| Comparative Example 4 | Δ | X |
| Comparative Example 5 | Δ | Δ |

| | | |
|---|---|---|
| * ⊚: Charge and discharge efficiency is larger than or equal to 98% / capacity retention is larger than or equal to 90% * Δ: Charge and discharge efficiency is larger than or equal to 97% and less than 98% / capacity retention is larger than or equal to 80% and less than 90% * X: Charge and discharge efficiency is less than 97% / capacity retention is less than 80% | | |

Referring to Table 3, the rechargeable lithium battery cells according to Examples 3 and 4 had higher charge and discharge efficiency and capacity retention than the ones according to Comparative Examples 3 to 5. The reason is that the rechargeable lithium battery cells according to Examples 3 and 4 had improved adhesive property of a separator to an electrode.

Referring to Tables 1 to 3, a separator used for the rechargeable lithium battery cells according to Examples 3 and 4 had a similar thermal shrinkage ratio to one for the rechargeable lithium battery cells according to Comparative Examples 3 to 5 but better adherence to an electrode, improving charge and discharge efficiency and capacity retention of the rechargeable lithium battery cells.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A separator for a rechargeable lithium battery comprising:
a substrate; and
a coating layer disposed on at least one surface of the substrate, wherein the coating layer comprises at least one polymeric binder, wherein the at least one polymeric binder comprises a first polymeric binder having a first average particle diameter and a second polymeric binder having a second average particle diameter less than the first average particle diameter, wherein the second average particle diameter is of less than or equal to 80% of the first average particle diameter;
or wherein the at least one polymeric binder comprises a third polymeric binder and a fourth polymeric binder, wherein the third polymeric binder is soluble in a solvent which the fourth polymeric binder is insoluble in, wherein the solvent is N-methyl-2-pyrrolodone, dimethyl formamide, dimethyl acetamide, tetramethyl urea, triethyl phosphate, dimethyl sulfoxide, acetone, methyl ethyl ketone, methyl isobutyl ketone, cyclohexanone or a combination thereof,
wherein, when present, the amounts of the first, second, third or fourth polymeric binders present at a surface portion of the coating layer are greater than at an inner portion of the coating layer,
the third polymeric binder is selected from the group consisting of polyvinylidene fluoride (PVdF), polyvinylidene fluoride-hexafluoropropylene (PVdF-co-HFP), polyvinylidene fluoride-trichloroethylene, polyvinylpyrrolidone, polyethyleneoxide (PEO), polyacrylonitrile (PAN), polyimide (PI), polyamic acid (PAA), polyamideimide (PAI), aramid, polyvinylacetate (PVA), an ethylenevinylacetate copolymer, an ethyleneethylacrylate copolymer, polymethylmetaacrylate (PMMA), polyvinylether (PVE), carboxylmethylcellulose, polyacrylic acid, polyvinyl alcohol, or a combination thereof, and the fourth polymeric binder is selected from the group consisting of a styrene-butadiene rubber, a butyl rubber, a fluorine rubber, polytetrafluoroethylene, polyethylene, polypropylene, ethylene propylene copolymer, polyvinylpyrrolidone, polyepichlorohydrine, polyphosphazene, polystyrene, ethylene propylene diene copolymer, polyvinylpyridine, chlorosulfonated polyethylene, latex, a polyester resin, a phenolic resin, an epoxy resin, or a combination thereof, and
wherein the amount of the second polymeric binder present at a surface portion of the coating layer is greater than at an inner portion of the coating layer or the amounts of the fourth polymeric binder at a surface portion of the coating layer is greater than at an inner portion of the coating layer.

2. The separator for a rechargeable lithium battery of claim 1, wherein the coating layer further comprises at least one inorganic compound, wherein the at least one inorganic compound comprises a metal oxide, a semi-metal oxide, a metal fluoride, a metal hydroxide, or a combination thereof, preferably Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, MgF₂ or a combination thereof.

3. The separator for a rechargeable lithium battery of any of claim 1 or claim 2, wherein the first and second polymeric binders are independently selected from the group consisting of emulsion, suspension and colloid polymeric binders, preferably independently selected from the group consisting of a diene-based polymer, an acrylate-based polymer, a styrene-based polymer, a urethane-based polymer, a polyolefin-based polymer, or a combination thereof.

4. The separator for a rechargeable lithium of any of claims 1 to 3 wherein the coating layer comprises more of the first polymeric binder than the second polymeric binder or more of the third polymeric binder than the fourth polymeric binder.

5. The separator for a rechargeable lithium of claim 4, wherein the first and second polymeric binder or the third and fourth polymeric binders are included in an amount of 70 to 99 parts by weight and 1 to 30 parts by weight, respectively, based on the total weight of the polymeric binder.

6. The separator for a rechargeable lithium battery of any of claims 2 to 5, wherein the at least one polymeric binder is included in an amount of 1 to 30 parts by weight based on 100 parts by weight of the inorganic compound.

7. The separator for a rechargeable lithium battery of any of claims 1 to 6, wherein the first average particle diameter is in a range of 50nm to 500 nm, and, optionally, the second average particle diameter is in a range of 20nm to 400 nm.

8. The separator for a rechargeable lithium battery of any of claims 1 to 6, wherein the fourth polymeric binder has an average particle diameter in a range of 50nm to 500 nm.

9. A method for producing the separator for a rechargeable lithium battery of any of claims 1 to 8, comprising the steps of:
preparing a slurry comprising the at least one polymeric binder,
applying said slurry to at least one side of the substrate, and
drying the slurry at a rate of 30 to 70%/min.

10. The method according to claim 9, wherein the slurry further contains a solvent, preferably the solvent is selected from the group consisting of N-methyl-2-pyrrolodone, dimethyl formamide, dimethyl acetamide, tetramethyl urea, triethyl phosphate, dimethyl sulfoxide, acetone, methyl ethyl ketone, methyl isobutyl ketone, cyclohexanone, or a combination thereof.

11. The method according to claim 9 or claim 10, wherein the drying is carried out using hot air drying or infrared drying.

12. A rechargeable lithium battery comprising the separator of any of claims 1 to 8 or a separator produced by the method of any of claims 9 to 11.

## Patentansprüche

1. Separator für eine wiederaufladbare Lithiumbatterie, umfassend:
ein Substrat; und
eine Überzugsschicht, angeordnet auf mindestens einer Oberfläche des Substrats, wobei die Überzugsschicht mindestens ein polymeres Bindemittel umfasst, wobei das mindestens eine polymere Bindemittel ein erstes polymeres Bindemittel mit einem ersten mittleren Teilchendurchmesser und ein zweites polymeres Bindemittel mit einem zweiten mittleren Teilchendurchmesser, der kleiner als der erste mittlere Teilchendurchmesser ist, umfasst, wobei der zweite mittlere Teilchendurchmesser kleiner als oder gleich 80 % des ersten mittleren Teilchendurchmessers ist;
oder wobei das mindestens eine polymere Bindemittel ein drittes polymeres Bindemittel und ein viertes polymeres Bindemittel umfasst, wobei das dritte polymere Bindemittel in einem Lösungsmittel, in dem das vierte polymere Bindemittel unlöslich ist, löslich ist, wobei das Lösungsmittel N-Methyl-2-pyrrolidon, Dimethylformamid, Dimethylacetamid, Tetramethylharnstoff, Triethylphosphat, Dimethylsulfoxid, Aceton, Methylethylketon, Methylisobutylketon, Cyclohexanon oder eine Kombination davon ist,
wobei, wenn vorhanden, die in einem Oberflächenteil der Überzugsschicht vorhandenen Mengen des ersten, zweiten, dritten oder vierten polymeren Bindemittels größer als in einem inneren Teil der Überzugsschicht sind,
wobei das dritte polymere Bindemittel ausgewählt ist aus der Gruppe bestehend aus Polyvinylidenfluorid (PVDF), Polyvinylidenfluorid-Hexafluorpropylen (PVDF-co-HFP), Polyvinylidenfluorid-Trichlorethylen, Polyvinylpyrrolidon, Polyethylenoxid (PEO), Polyacrylnitril (PAN), Polyimid (PI), Polyamidsäure (PAA), Polyamidimid (PAI), Aramid, Polyvinylacetat (PVA), einem Ethylenvinylacetat-Copolymer, einem Ethylenethylacrylat-Copolymer, Polymethylmethacrylat (PMMA), Polyvinylether (PVE), Carboxylmethylcellulose, Polyacrylsäure, Polyvinylalkohol, oder einer Kombination davon, und das vierte polymere Bindemittel ist ausgewählt aus der Gruppe bestehend aus einem Styrol-Butadien-Kautschuk, einem Butylkautschuk, einem Fluorkautschuk, Polytetrafluorethylen, Polyethylen, Polypropylen, Ethylen-Propylen-Copolymer, Polyvinylpyrrolidon, Polyepichlorhydrin, Polyphosphazen, Polystyrol, Ethylen-Propylen-Dien-Copolymer, Polyvinylpyridin, chlorsulfoniertem Polyethylen, Latex, einem Polyesterharz, einem Phenolharz, einem Epoxidharz, oder einer Kombination davon, und
wobei die in einem Oberflächenteil der Überzugsschicht vorhandene Menge des zweiten polymeren Bindemittels größer als in einem inneren Teil der Überzugsschicht ist, oder die Menge des vierten polymeren Bindemittels in einem Oberflächenteil der Überzugsschicht größer als in einem inneren Teil der Überzugsschicht ist.

2. Separator für eine wiederaufladbare Lithiumbatterie nach Anspruch 1, wobei die Überzugsschicht ferner mindestens eine anorganische Verbindung umfasst, wobei die mindestens eine anorganische Verbindung ein Metalloxid, ein Halbmetalloxid, ein Metallfluorid, ein Metallhydroxid, oder eine Kombination davon, vorzugsweise Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, MgF₂ oder eine Kombination davon, umfasst.

3. Separator für eine wiederaufladbare Lithiumbatterie nach einem von Anspruch 1 oder Anspruch 2, wobei das erste und zweite polymere Bindemittel unabhängig voneinander ausgewählt sind aus der Gruppe bestehend aus polymeren Emulsionsbindemitteln, polymeren Suspensionsbindemitteln und kolloidalen polymeren Bindemitteln, wobei sie vorzugsweise unabhängig voneinander ausgewählt sind aus der Gruppe bestehend aus einem Polymer auf Dienbasis, einem Polymer auf Acrylatbasis, einem Polymer auf Styrolbasis, einem Polymer auf Urethanbasis, einem Polymer auf Polyolefinbasis, oder einer Kombination davon.

4. Separator für eine wiederaufladbare Lithiumbatterie nach einem der Ansprüche 1 bis 3, wobei die Überzugsschicht mehr von dem ersten polymeren Bindemittel als von dem zweiten polymeren Bindemittel oder mehr von dem dritten polymeren Bindemittel als von dem vierten polymeren Bindemittel umfasst.

5. Separator für eine wiederaufladbare Lithiumbatterie nach Anspruch 4, wobei das erste und zweite polymere Bindemittel oder das dritte und vierte polymere Bindemittel in einer Menge von 70 bis 99 Gewichtsteilen bzw. 1 bis 30 Gewichtsteilen, bezogen auf das Gesamtgewicht des polymeren Bindemittels, enthalten sind.

6. Separator für eine wiederaufladbare Lithiumbatterie nach einem der Ansprüche 2 bis 5, wobei das mindestens eine polymere Bindemittel in einer Menge von 1 bis 30 Gewichtsteilen, bezogen auf 100 Gewichtsteile der anorganischen Verbindung, enthalten ist.

7. Separator für eine wiederaufladbare Lithiumbatterie nach einem der Ansprüche 1 bis 6, wobei der erste mittlere Teilchendurchmesser in einem Bereich von 50 nm bis 500 nm liegt, und, gegebenenfalls, der zweite mittlere Teilchendurchmesser in einem Bereich von 20 nm bis 400 nm liegt.

8. Separator für eine wiederaufladbare Lithiumbatterie nach einem der Ansprüche 1 bis 6, wobei das vierte polymere Bindemittel einen mittleren Teilchendurchmesser in einem Bereich von 50 nm bis 500 nm aufweist.

9. Verfahren zur Herstellung des Separators für eine wiederaufladbare Lithiumbatterie nach einem der Ansprüche 1 bis 8, umfassend die folgenden Schritte:
Herstellen einer Aufschlämmung, umfassend das mindestens eine polymere Bindemittel,
Aufbringen der Aufschlämmung auf mindestens eine Seite des Substrats, und
Trocknen der Aufschlämmung mit einer Rate von 30 bis 70 %/min.

10. Verfahren nach Anspruch 9, wobei die Aufschlämmung ferner ein Lösungsmittel enthält, wobei das Lösungsmittel vorzugsweise ausgewählt ist aus der Gruppe bestehend aus N-Methyl-2-pyrrolidon, Dimethylformamid, Dimethylacetamid, Tetramethylharnstoff, Triethylphosphat, Dimethylsulfoxid, Aceton, Methylethylketon, Methylisobutylketon, Cyclohexanon, oder einer Kombination davon.

11. Verfahren nach Anspruch 9 oder Anspruch 10, wobei das Trocknen mittels Heißlufttrocknung oder Infrarottrocknung durchgeführt wird.

12. Wiederaufladbare Lithiumbatterie, umfassend den Separator nach einem der Ansprüche 1 bis 8 oder einen Separator, hergestellt mit dem Verfahren nach einem der Ansprüche 9 bis 11.

## Revendications

1. Séparateur pour une batterie rechargeable au lithium comprenant :
un substrat ; et
une couche de revêtement disposée sur au moins une surface du substrat, la couche de revêtement comprenant au moins un liant polymère, l'au moins un liant polymère comprenant un premier liant polymère ayant une première granulométrie moyenne et un deuxième liant polymère ayant une deuxième granulométrie moyenne inférieure à la première granulométrie moyenne, et la deuxième granulométrie moyenne étant inférieure ou égale à 80 % de la première granulométrie moyenne ;
ou dans lequel l'au moins un liant polymère comprend un troisième liant polymère et un quatrième liant polymère, le troisième liant polymère étant soluble dans un solvant dans lequel le quatrième liant polymère est insoluble, le solvant étant la N-méthyl-2-pyrrolidone, le diméthylformamide, le diméthylacétamide, la tétraméthylurée, le phosphate de triéthyle, le diméthylsulfoxyde, l'acétone, la méthyléthylcétone, la méthylisobutylcétone, la cyclohexanone ou une de leurs combinaisons,
dans lequel, lorsqu'ils sont présents, les quantités des premier, deuxième, troisième ou quatrième liants polymères présents au niveau d'une partie de surface de la couche de revêtement sont supérieures à celles au niveau d'une partie intérieure de la couche de revêtement,
le troisième liant polymère est choisi dans le groupe constitué par le poly(fluorure de vinylidène) (PVdF), le poly(fluorure de vinylidène-hexafluoropropylène) (PVdF-co-HFP), le poly(fluorure de vinylidène-trichloroéthylène), la polyvinylpyrrolidone, le poly(oxyde d'éthylène) (PEO), le polyacrylonitrile (PAN), le polyimide (PI), le poly(acide amique) (PAA), le poly(amide-imide) (PAI), l'aramide, le poly(acétate de vinyle) (PVA), un copolymère d'éthylène-acétate de vinyle, un copolymère d'éthylène-acrylate d'éthyle, le poly(méthacrylate de méthyle) (PMMA), le polyvinyléther (PVA), la carboxyméthylcellulose, le poly-(acide acrylique), le poly(alcool vinylique), et leurs combinaisons, et le quatrième liant polymère est choisi dans le groupe constitué par un caoutchouc de styrène-butadiène, un caoutchouc de butyle, un caoutchouc fluoré, le polytétrafluoroéthylène, le polyéthylène, le polypropylène, un copolymère d'éthylène-propylène, la polyvinylpyrrolidone, la polyépichlorhydrine, le poly-phosphazène, le polystyrène, un copolymère d'éthylène-propylène-diène, la polyvinylpyridine, le polyéthylène chlorosulfoné, le latex, une résine de polyester, une résine phénolique, une résine époxy, et leurs combinaisons, et
dans lequel la quantité du deuxième liant polymère présent au niveau d'une partie de surface de la couche de revêtement est supérieure à celle au niveau d'une partie intérieure de la couche de revêtement ou la quantité du quatrième liant polymère au niveau d'une partie de surface de la couche de revêtement est supérieure à celle au niveau d'une partie intérieure de la couche de revêtement.

2. Séparateur pour une batterie rechargeable au lithium selon la revendication 1, dans lequel la couche de revêtement comprend en outre au moins un composé inorganique, l'au moins un composé inorganique comprenant un oxyde métallique un oxyde semi-métallique, un fluorure métallique, un hydroxyde métallique, ou une combinaison de ceux-ci, de préférence Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, MgF₂ ou une combinaison de ceux-ci.

3. Séparateur pour une batterie rechargeable au lithium selon l'une quelconque de la revendication 1 et de la revendication 2, dans lequel les premier et deuxième liants polymères sont indépendamment choisis dans le groupe constitué par les liants polymères en émulsion, en suspension et colloïdaux, de préférence indépendamment choisis dans le groupe constitué par un polymère à base de diène, un polymère à base d'acrylate, un polymère à base de styrène, un polymère à base d'uréthane, un polymère à base de polyoléfine, et leurs combinaisons.

4. Séparateur pour une batterie rechargeable au lithium selon l'une quelconque des revendications 1 à 3, dans lequel la couche de revêtement comprend davantage du premier liant polymère que du deuxième liant polymère ou davantage du troisième liant polymère que du quatrième liant polymère.

5. Séparateur pour une batterie rechargeable au lithium selon la revendication 4, dans lequel les premier et deuxième liants polymères ou les troisième et quatrième liants polymères sont présents en une quantité de 70 à 99 parties en poids et de 1 à 30 parties en poids, respectivement, par rapport au poids total du liant polymère.

6. Séparateur pour une batterie rechargeable au lithium selon l'une quelconque des revendications 2 à 5, dans lequel l'au moins un liant polymère est présent en une quantité de 1 à 30 parties en poids pour 100 parties en poids du composé inorganique.

7. Séparateur pour une batterie rechargeable au lithium selon l'une quelconque des revendications 1 à 6, dans lequel la première granulométrie moyenne est située dans la plage allant de 50 nm à 500 nm et, éventuellement, la deuxième granulométrie moyenne est située dans la plage allant de 20 nm à 400 nm.

8. Séparateur pour une batterie rechargeable au lithium selon l'une quelconque des revendications 1 à 6, dans lequel le quatrième liant polymère a une granulométrie moyenne située dans la plage allant de 50 nm à 500 nm.

9. Procédé pour produire le séparateur pour une batterie rechargeable au lithium de l'une quelconque des revendications 1 à 8, comprenant les étapes consistant à :
préparer une bouillie comprenant l'au moins un liant polymère,
appliquer ladite bouillie sur au moins un côté du substrat, et
sécher la bouillie à une vitesse de 30 à 70 % par minute.

10. Procédé selon la revendication 9, dans lequel la bouillie contient en outre un solvant, de préférence le solvant est choisi dans le groupe constitué par la N-méthyl-2-pyrrolidone, le diméthylformamide, le diméthylacétamide, la tétraméthylurée, le phosphate de triéthyle, le diméthylsulfoxyde, l'acétone, la méthyléthylcétone, la méthylisobutylcétone, la cyclohexanone, et leurs combinaisons.

11. Procédé selon la revendication 9 ou la revendication 10, dans lequel le séchage est effectué par utilisation d'un séchage à l'air chaud ou d'un séchage aux infrarouges.

12. Batterie rechargeable au lithium comprenant le séparateur de l'une quelconque des revendications 1 à 8 ou séparateur produit par le procédé de l'une quelconque des revendications 9 à 11.
